# EUROPEAN PATENT SPECIFICATION

(11) **EP 2 940 074 B1**
(45) Date of publication and mention of the grant of the patent: **02.08.2017**
(21) Application number: 12890927.2
(22) Date of filing: 28.12.2012
(51) Int. Cl.: C08L 59/04, C08K 3/04, C08L 101/12, C08J 5/00, C08L 59/02

(54) **CARBON NANOTUBE-POLYOXYMETHYLENE RESIN COMPOSITION HAVING EXCELLENT ELECTRICAL CONDUCTIVITY AND IMPROVED PROCESSABILITY PROPERTIES AND HEAT STABILITY, AND MOLDED ARTICLE THEREOF**
KOHLENSTOFFNANORÖHRCHEN-POLYOXYMETHYLEN-HARZZUSAMMENSETZUNG MIT AUSGEZEICHNETER ELEKTRISCHER LEITFÄHIGKEIT UND VERBESSERTEN VERARBEITUNGSEIGENSCHAFTEN UND WÄRMESTABILITÄT UND DARAUS GEFORMTER GEGENSTAND
COMPOSITION DE RÉSINE À BASE DE NANOTUBES DE CARBONE ET DE POLYOXYMÉTHYLÈNE PRÉSENTANT UNE EXCELLENTE CONDUCTIVITÉ ÉLECTRIQUE ET DES PROPRIÉTÉS DE TRAITEMENT AMÉLIORÉES, AINSI QU'UNE MEILLEURE STABILITÉ À LA CHALEUR, ET ARTICLE MOULÉ OBTENU

(43) Date of publication of application: 04.11.2015
(73) Proprietor: Korea Engineering Plastics Co., Ltd, 121-805 Seoul (KR)
(72) Inventor: PARK, Seung-Chin, Seoul 135-856 (KR); JUNG, Chung-Youl, Anyang-si Gyeonggi-do 431-708 (KR); LEE, Chang-Ho, Seoul 152-862 (KR)
(74) Representative: Vidon Brevets & Stratégie
(86) International application number: PCT/KR2012/011757
(87) International publication number: WO 2014/104447

(56) References cited:
- EP-A2- 0 561 582
- WO-A1-2005/054365
- JP-A- 2000 026 705
- JP-A- 2008 081 530
- JP-A- 2010 144 112
- JP-A- 2012 140 482
- KR-A- 20070 105 995
- KR-A- 20110 129 659
- KR-A- 20120 057 976
- US-A- 5 290 858
- US-A1- 2009 048 385

## Description

### [Technical Field]

The present invention relates to a carbon nanotube-polyoxymethylene resin composition having improved processability and heat stability as well as excellent electrical conductivity, and a molded article formed of the resin composition.

### [Background Art]

In general, since polyoxymethylene (POM) resin has excellent mechanical properties, fatigue resistance, friction and wear resistance, creep resistance, and long-term dimensional stability, polyoxymethylene resin has been widely used in various parts that require a range of physical properties, from various electrical and electronic components to automotive parts.

Electrical conductivity is further required in addition to existing physical properties;, for example, with respect to electrical and electronic components, antistatic properties, such as anti-electrostatic discharge (anti-ESD) and dust contamination prevention, are required to prevent malfunctioning and contamination of the components, and conductivity is also required for automotive fuel pump parts.

Polyoxymethylene resin is an insulating material having a high degree of surface resistivity, and electrical conductivity is typically provided by adding a surfactant, a metal powder, metal fibers, or conductive carbon black.

A method of adding the surfactant, among the above materials, may provide an antistatic function to a molded article by allowing the surfactant to move onto the surface of the polyoxymethylene resin to combine with ambient atmospheric moisture. However, the method may have limitations in that deviations in surface resistance may occur, depending on the ambient environment, the duration for which antistatic properties are reduced, and significantly lower conductivity than in the case of adding metal powder or conductive carbon black may be provided.

In a case in which conductivity is provided to the polyoxymethylene resin by adding metal powder or metal fibers, mechanical strength, as a property of the polyoxymethylene resin, may be decreased, corrosion resistance may also be deteriorated due to the added metal powder, and, furthermore, there are limitations in industrial applications due to high weight.

Conductive carbon black has frequently been selected and used as a medium for providing conductivity. However, conductive carbon black also has a lot of limitations. First, there is a need to add a large amount of carbon black in order to obtain a high degree of electrical conductivity, and second, the structure of carbon black is sometimes decomposed during a high shear melt mixing process. As a result, processability of the polyoxymethylene resin may be deteriorated, and heat stability and physical properties may be significantly deteriorated.

Accordingly, in order to improve conductivity while reducing the amount of the conductive filler added, research into a carbon nanotube-polyoxymethylene composite, in which carbon nanotubes are added instead of carbon black, has been actively conducted. The structure of carbon nanotubes (CNTs) was identified in 1991 by Dr. lijima of NEC Corporation's Research Laboratory, and since then, a significant amount of experimental and theoretical research has been conducted thereon. Due to research and development, carbon nanotubes have been used in various applications, ranging from semiconductor devices to transparent electrodes, field emission display devices, electromagnetic shielding materials, and conductive fillers for various composite resins. For instance, the patent document US20090048385A1 discloses a polyoxymethylene resin composition, including carbon nanotubes, with good mechanical and conducting properties.

Carbon nanotubes have great potential as an industrial material due to their excellent electrical properties, mechanical strength, and chemical stability, wherein carbon nanotubes are categorized as single-walled carbon nanotubes (SWCNTs) having a 2-dimensional cylindrically wrapped shape and multi-walled carbon nanotubes (MWCNTs) in which the single-walled carbon nanotubes are stacked in multiple layers.

A method of manufacturing a carbon nanotube-polyoxymethylene composite may include in situ polymerization in which carbon nanotubes are mixed with a monomer and then polymerized, solution mixing in which a solution is prepared by dissolving polyoxymethylene in a solvent and is mixed with carbon nanotubes, bulk mixing in which polyoxymethylene resin powder and carbon nanotubes are mixed at high speed, and melt mixing in which polyoxymethylene is mixed with carbon nanotubes while in a molten state.

Since in situ polymerization and solution mixing require a process of dispersing carbon nanotubes with ultrasonic waves and also require a large reactor, the time required for the production process may increase, and costs may also increase.

In a case in which melt mixing is only used to disperse carbon nanotubes in a polyoxymethylene resin, the degree of dispersion of carbon nanotubes is decreased to deteriorate properties sought through the use of carbon nanotubes.

Also, in improving electrical conductivity by adding carbon nanotubes to a polyoxymethylene resin, the deterioration of inherent mechanical properties of the polyoxymethylene resin must be minimized, emissions of formaldehyde gas due to the thermal decomposition of the polyoxymethylene resin must be low, and there must be no limitation in processing; for example, the occurrence of voids in the processing of a molded article in which the composition is used.

Thus, since a polyoxymethylene resin composition according to the present invention has excellent heat stability as well as good mechanical strength, emissions of formaldehyde gas are significantly low, and there are no limitations in the production process and secondary processability. Therefore, the development of a carbon nanotube-polyoxymethylene composite having sufficient electrical properties while adding a small amount of carbon nanotubes is required.

### [Disclosure]

### [Technical Problem]

An aspect of the present invention provides a carbon nanotube-polyoxymethylene composite having excellent electrical conductivity, while maintaining mechanical properties of polyoxymethylene even if only a small amount of carbon nanotubes is added thereto, by uniformly dispersing carbon nanotubes in a polyoxymethylene resin, and a method of manufacturing the carbon nanotube-polyoxymethylene composite.

Another aspect of the present invention is reducing the occurrence of voids and tearing, and to reducing emissions of formaldehyde gas from polyoxymethylene resin by decreasing shear stress during compounding by using a modifier having processing properties in a polyoxymethylene resin composition including carbon nanotubes.

Another aspect of the present invention provides a polyoxymethylene resin molded article having excellent heat stability, electrical conductivity, and processability by using the above resin composition.

### [Technical Solution]

According to an aspect of the present invention, there is provided a carbon nanotube-polyoxymethylene resin composition including: 1 part by weight to 6 parts by weight of carbon nanotubes; and 0.3 part by weight to 3 parts by weight of a modifier having processing properties based on 100 parts by weight of polyoxymethylene, wherein the modifier having processing properties is a polymer having a core-shell structure.

A polyoxymethylene resin having a melt index of 0.1 g/10 min to 100 g/10 min may be used.

Carbon nanotubes having a Brunauer-Emmett-Teller (BET) surface area of 150 m²/g to 300 m²/g, a diameter of 10 nm to 40 nm, and a length of 1 µm to 25 µm may be used.

The polymer having a core-shell structure may be composed of a core of a rubbery polymer and a shell of a glassy polymer.

The rubbery polymer may be an alkyl acrylate having an alkyl group having 2 to 8 carbon atoms and, for example, may be a butyl acrylate.

The glassy polymer may be a vinyl-based copolymer having an oxygen-containing polar group, and the oxygen-containing polar group may be at least one selected from a group consisting of a hydroxyl group, a group having an ether bond, an amide group, and a nitro group. For example, the group having an ether bond may be a glycidyl group.

The vinyl-based copolymer having an oxygen-containing polar group may be polymerized from a monomer having 2 to 5 oxygen-containing polar groups respectively containing one or more selected from a group consisting of hydroxyethyl (meth)acrylate, hydroxypropyl (meth)acrylate, and glycidyl (meth)acrylate, and the vinyl-based copolymer having an oxygen-containing polar group may also be a copolymer of the monomer having an oxygen-containing polar group and a monomer selected from alkyl (meth)acrylate having an alkyl group having 1 to 4 carbon atoms, styrene, vinyl toluene or aromatic vinyl, or aromatic vinylidene having 2 to 8 carbon atoms, and vinyl cyanide or vinylidene cyanide.

An amount of the shell may be in a range of 10 wt% to 50 wt% based on the total weight of the polymer having a core-shell structure.

The modifier having processing properties may be a mixture including the polymer having a core-shell structure and an ionomer in a weight ratio of 1:1 to 10:1, and, in the ionomer, hydrogen atoms of a carboxyl group, included in a copolymer composed of α-olefin and methyl acrylate or a derivative thereof, are substituted with ions of a metal selected from a group consisting of zinc (Zn), sodium (Na), magnesium (Mg), and lithium (Li).

According to another aspect of the present invention, there is provided a molded article formed of the carbon nanotube-polyoxymethylene resin composition, wherein emissions of formaldehyde gas, measured using VDA 275, are 20 mg/kg or less. Also, the molded article may have a surface resistivity of 10² Ω/sq to 10⁹ Ω/sq.

### [Advantageous Effects]

According to the present invention, due to a carbon nanotube-polyoxymethylene resin composition, carbon nanotubes are uniformly dispersed in the composition while maintaining the inherent excellent mechanical properties of a polyoxymethylene resin, and thus, a polyoxymethylene resin composition having excellent electrical properties, e.g., a surface resistance of 10² Ω/sq to 10⁹ Ω/sq, may be obtained.

Also, shear stress during compounding may be reduced by using a modifier having processing properties, and heat stability of the composition may be improved by significantly reducing emissions of formaldehyde gas.

Furthermore, since voids or tearing may not occur in the processing of an extruded molded article produced using a resin composition according to an embodiment of the present invention, the processability of a final product may be maximized.

### [Description of Drawings]

FIG. 1 illustrates a surface of a molded plate obtained by using a resin composition of Example 5 of the present invention; and
FIGS. 2 and 3 respectively illustrate surfaces of molded plates obtained by using resin compositions of Comparative Examples 3 and 9, wherein FIG. 2 illustrates the surface of the molded article in which tearing occurs, and FIG. 3 illustrates the surface of the molded article in which voids are formed.

### [Best Mode]

The present invention relates to a carbon nanotube-polyoxymethylene resin composition having improved processability and heat stability, as well as excellent electrical conductivity, and a molded article formed therefrom.

Hereinafter, the present invention will be described in more detail.

In the present invention, polyoxymethylene resin is used as a main component resin. In general, the polyoxymethylene resin may be a homopolymer or a copolymer including an oxymethylene group (-CH₂O-) as a main structural unit, and, for example, a copolymer of the oxymethylene group and 1,3-dioxolane may be used.

The oxymethylene copolymer may be obtained by random copolymerization of a mixture in which a 1,3 dioxolane monomer and formaldehyde or a cyclic oligomer of trioxane or tetraoxane, for example, a cyclic oligomer of trioxane, are mixed. The 1,3-dioxolane comonomer is added to trioxane or tetraoxane as a main monomer, and the polyoxymethylene copolymer of the present invention may then be obtained by random copolymerization of the mixture in the presence of a Lewis acid catalyst. The copolymer thus obtained has a melting point of 150°C or more and has two or more combined carbon atoms in a main chain.

In the oxymethylene copolymer, a ratio of an oxymethylene bond structure to an oxymethylene repeating unit may be in a range of 0.05 mole to 50 moles; for example, 0.1 mole to 20 moles.

A known anionic catalyst or cationic catalyst may be used as a polymerization catalyst used in a polymerization reaction of the polyoxymethylene copolymer. Examples of the polymerization catalyst of trioxane may be a halogen such as chlorine, bromine, or iodine; an organic acid or an inorganic acid such as alkyl or allyl sulfonic acid, derivatives of HClO₄, HIO₄, and HClO₄, CPh₃C(IO₄), and R₃SiHSO₄; a metal halide such as BF₃, SbF₃, SnCl₄, TiCl₄, FeCl₃, ZrCl₄, MoCl₅, or SiF₄; a complex of the metal halide such as BF₃·OH₂, BF₃·OEt₂, BF₃·OBu₂, BF₃·CH₃COOH, BF₃·PF₅·HF, BF₃-10-hydroxyacetphenol, Ph₃CSnCl₅, Ph₃CBF₄, or Ph₃CSbCl₆; a metal ester such as carboxylate compounds of copper, zinc, cadmium, iron, cobalt, and nickel; metal oxide such as P₂O₅+SO₂ and P₂O₅+phosphate ester; and a catalyst in which organic metal and metal halide are combined (where Ph denotes a phenyl group, Et denotes an ethyl group, and Bu denotes a butyl group). Among the above materials, a coordination bond compound of boron trifluoride may be used, and, for example, BF₃·OEt₂ and BF₃·OBu₂ may be used. An amount of the polymerization catalyst added may be in a range of 2×10⁻⁶ moles to 2×10⁻² moles, based on 1 mole of trioxane.

The polymerization may be performed in the form of bulk polymerization, suspension polymerization, or solution polymerization. The reaction temperature is in a range of 0°C to 100°C, and may be in a range of 20°C to 80°C.

In general, examples of a deactivator for deactivating the remaining catalyst after the polymerization may be tertiary amines such as triethylamine, cyclic sulfur compounds such as thiophene, and phosphorus compounds such as triphenylphosphine, and since these materials, as Lewis base materials having lone pairs, may form a complex with the catalyst, these materials may be used as the deactivator.

Also, during the polymerization reaction of the polyoxymethylene copolymer, alkyl-substituted phenol or ethers may be used as a chain transfer agent, and, for example, an alkyl ether, such as dimethoxymethane, may be used.

The polyoxymethylene resin of the present invention is in a powder form, wherein the polyoxymethylene resin having a particle diameter of 1 µm to 500 µm may be used. Uniform dispersion of carbon nanotubes added to the polyoxymethylene resin composition may be obtained by using the polyoxymethylene resin in a powder form, desired electrical conductivity may be obtained due to uniform dispersion, and an increase in emissions of formaldehyde may also be prevented by preventing an increase in shear stress during compounding.

Although the polyoxymethylene resin is not particularly limited, polyoxymethylene resin having a melt index (MI) of 0.1 g/10 min to 100 g/10 min may be used.

Carbon nanotubes used in the present invention are not particularly limited; single-walled carbon nanotubes or multi-walled carbon nanotubes may be used, and, for example, multi-walled carbon nanotubes may be used in terms of the fact in which conductivity is provided, manufacturing costs are relatively low, and handling is easy.

Commercially available carbon nanotubes may be used as the carbon nanotubes, and the carbon nanotubes are not particularly limited. However, carbon nanotubes having a Brunauer-Emmett-Teller (BET) surface area of 150 m²/g to 300 m²/g, a diameter of 10 nm to 40 nm, and a length of 1 µm to 25 µm may be used. Furthermore, carbon nanotubes having a purity of 93% or more may be used.

The carbon nanotubes may be included in an amount of 1 part by weight to 6 parts by weight based on 100 parts by weight of the polyoxymethylene resin. In a case in which the amount of the carbon nanotubes is less than 1 part by weight, sufficient electrical conductivity sought through the addition of the carbon nanotubes may not be obtained, and in a case in which the amount of the carbon nanotubes is greater than 6 parts by weight, heat stability of the polyoxymethylene resin molded article may be poor and processability may be deteriorated. Thus, the amount of carbon nanotubes added may be within the above range.

The carbon nanotube-polyoxymethylene resin composition of the present invention may include a modifier having processing properties, and a polymer having a core-shell structure may be used as the modifier having processing properties. The modifier having processing properties may reduce shear stress during compounding to reduce emissions of formaldehyde from the carbon nanotube-polyoxymethylene resin composition, prevent the fracturing of a plate during extrusion, and suppress voids and tearing, i.e., a surface defect phenomenon occurring during secondary processing.

The polymer having a core-shell structure is composed of a core part formed of a rubbery polymer and a shell part formed of a glassy polymer. The polymer having a core-shell structure may be generally obtained by continuous emulsion polymerization, in which a core part of a polymer formed in a previous stage is coated with a polymer in a later stage, among seeded emulsion polymerizations. The shell part may be included in an amount of 10 wt% to 50 wt% of the entire core-shell polymer. In a case in which the amount of the shell part is less than 10 wt%, the core-shell structured polymer may be excessively soft, and in a case in which the amount of the shell part is greater than 50 wt%, the elastomer having a core-shell structure may be excessively rigid. Thus, since the polymer may not sufficiently function as the modifier having processing properties, the amount of the shell part may be within the above range.

The rubbery polymer forming the core part of the polymer having a core-shell structure may be formed by polymerization using a conjugated diene, an alkyl acrylate having an alkyl group having 2 to 8 carbon atoms, or mixtures thereof, as a monomer. Examples of the conjugated diene may be butadiene, isoprene (2-methyl-buta-1,3-diene), or chloroprene (2-chloro-1,3-butadiene). Also, examples of the alkyl acrylate having an alkyl group having 2 to 8 carbon atoms may be ethyl acrylate, propyl acrylate, butyl acrylate, or cyclohexyl acrylate. In particular, butyl acrylate may be used as the rubbery polymer.

The glassy polymer forming the shell part of the polymer having a core-shell structure may have an oxygen-containing polar group. Examples of the oxygen-containing polar group may be a hydroxyl group (-OH), a group having an ether bond (-OR), an amide group (-CONH), and a nitro group (-NO₂), but the hydroxyl group and the group having an ether bond may be used. A glycidyl group, for example, may be used as the group having an ether bond. Two or more, for example, 2 to 5 oxygen-containing polar groups, may be present in the monomer. For example, the glassy polymer having an alcohol group and an oxygen-containing polar group other than the alcohol group in the molecule may be used.

Also, the glassy polymer may be a vinyl-based polymer having the oxygen-containing polar group. (Meth)acrylate may be used as a monomer constituting the vinyl-based polymer, and the (meth)acrylate may have the two or more oxygen-containing polar groups. For example, the oxygen-containing polar group may be a hydroxyl group or a glycidyl group, and may include both the hydroxyl group and the glycidyl group.

Examples of the (meth)acrylate having a hydroxyl group as the oxygen-containing polar group may be hydroxyethyl (meth)acrylate and hydroxypropyl (meth)acrylate, and hydroxyethyl (meth)acrylate may be used. Also, examples of the (meth)acrylate having a glycidyl group as the oxygen-containing polar group may be glycidyl (meth)acrylate, and glycidyl (meth)acrylate may be used. Furthermore, examples of (meth)acrylate having an amide group or a nitro group may be amino (meth)acrylate and nitro (meth)acrylate.

In addition to the above (meth)acrylates, a vinyl monomer having an oxygen-containing polar group, e.g., allyloxyethanol and allylglycidylether, may also be used as a component of the vinyl copolymer having the oxygen-containing polar group. In addition to the monomer having an oxygen-containing polar group, examples of the monomer constituting the glassy polymer may be vinyl polymerizable monomers, e.g., alkyl(meth)acrylate, such as methyl (meth)acrylate, ethyl (meth)acrylate, and butyl (meth)acrylate, aromatic vinyl or aromatic vinylidene having 2 to 8 carbon atoms, such as styrene, vinyl toluene, and α-methyl styrene, and vinyl cyanide or vinylidene cyanide such as acrylonitrile and methacrylonitrile, and, for example, methyl (meth)acrylate, styrene, and acrylonitrile may be used.

The modifier having processing properties may be used by mixing an ionomer with the polymer having a core-shell structure. Since the ionomer is further included as the modifier having processing properties, an additional improvement of the processability of the molded article may be obtained.

A resin having a structure in which hydrogen atoms of a carboxyl group, included in a copolymer composed of α-olefin and methyl acrylate or a derivative thereof, are substituted with metal ions and may be used as the ionomer. To form a functional group-containing olefin, α-olefin and methyl acrylate are copolymerized, and the ionomer may be subsequently obtained by substituting a portion of the functional group, such as a carboxyl group, included in the copolymer thus obtained with metal ions. In this case, an ionomer having 4% to 15% of a carboxyl group substituted with metal may sufficiently exhibit a function as the modifier having processing properties.

As the metal ions used for the substitution of the carboxyl group, zinc (Zn), sodium (Na), magnesium (Mg), and lithium (Li), may be used, while Zn may be preferable therefor.

In order to obtain the above-described effect, the modifier having processing properties may be included in an amount of 0.3 part by weight to 3 parts by weight based on 100 parts by weight of the polyoxymethylene resin. In a case in which the amount of the modifier having processing properties is less than 0.3 part by weight, the effect sought through the modifier having processing properties may not be obtained. That is, since the effect of reducing shear stress during compounding is insignificant, fracturing during extrusion as well as voids and tearing, i.e., a surface defect phenomenon during secondary processing, may occur. In contrast, in a case in which the amount of the modifier having processing properties is greater than 3 parts by weight, mechanical properties (tensile strength of 58 MPa or more) required in an extruded product may not be satisfied, and a peeling phenomenon may occur during high-speed production.

In a case in which the ionomer is further included as the modifier having processing properties, the polymer having a core-shell structure and the ionomer may be included in a weight ratio of 10:1 to 1:1 in order to obtain an additional effect of improving the processability.

Furthermore, the polyoxymethylene resin composition of the present invention may include a heat stabilizer, an antioxidant, and a dispersant as components generally included in a polyoxymethylene resin composition.

Examples of the antioxidant may be sterically hindered phenols such as 2,2'-methylene-bis(4-methyl-6-t-butylphenol), 4,4'-methylene-bis(2,6-di-t-butylphenol), 1,3,5-trimethyl-2,4,6-tris(3,5-di-t-butyl-4-hydroxybenzyl)benzene, 2,5-di-t-butyl-4-hydroxybenzyl dimethylamine, stearyl-3,5-di-t-butyl-4-hydroxybenzyl phosphonate, diethyl-3,5-di-t-butyl-4-hydroxybenzyl phosphonate, 2,6,7-trioxa-1-phospho-bicyclo[2,2,2]-octo-4-yl-methyl-3,5-di-t-butyl-4-hydroxyhydrocinnamate, 3,5-di-t-butyl-4-hydroxyphenyl-3,5-distearyl-thiotriazylamine, 2(2'-hydroxy-3',5'-di-t-butylphenyl)-5-chlorobenzotriazole, 2,6-di-t-butyl-4-hydroxymethylphenol, 2,4-bis-(n-octylthio)-6-(4-hydroxy-3,5-dit-butylanilino)-1,3,5-triazine, N,N-hexamethylenebis(3,5-di-t-butyl-4-hydroxy-hydrocinnamamide), octadecyl-3-(3,5-di-butyl-4-hydroxyphenyl)propionate, 1,6-hexanediol-bis[3-(3,5-di-t-butyl-4-hydroxyphenyl)propionate], pentaerythrityl-tetrakis[3-(3,5-dit-butyl-4-hydroxyphenyl)propionate], triethylene glycol-bis[3-(3,5-dimethyl-4-hydroxyphenyl)propionate], triethylene glycol-bis-3-(3-t-butyl-4-hydroxy-5-methylphenyl)propionate, triethylene glycol-bis[3-(3,5-di-t-butyl-4-hydroxyphenyl)propionate], and 2,2'-thiodiethyl-bis[3-(3,5-di-t-butyl-4-hydroxyphenyl)propionate].

The antioxidant may be included in an amount of 0.01 parts by weight to 1 part by weight based on 100 parts by weight of the polyoxymethylene copolymer. In a case in which the amount of the antioxidant is less than 0.01 parts by weight, the improvement of heat stability is insignificant, and in a case in which the amount of the antioxidant is greater than 1 part by weight, physical properties of the molded article obtained may deteriorate, and the surface of the molded article may be poor.

Examples of the heat stabilizer may be amine-substituted triazine compounds such as guanamine, melamine, N-butyl melamine, N-phenyl melamine, N,N-diphenyl melamine, N,N-diaryl melamine, N,N',N"-triphenyl melamine, N,N',N"-trimethylol melamine, benzoguanamine, 2,4-diamino-6-methyl sym-triazine, 2,4-diamino-6-buthyl-sym-triazine, 2,4-diamino-6-benzyloxy-sym-triazine, 2,4-diamino-6-buthoxy-sym-triazine, 2,4-diamino-6-cyclohexylsym-triazine, 2,4-diamino-6-chloro-sym-triazine, 2,4-diamino-6-mercapto-sym-triazine, 2-oxy-4,6-diamino-sym-triazine (ammeline), and N,N,N',N'-tetracyanoethylbenzoguanamine.

The heat stabilizer may be included in an amount of 0.005 parts by weight to 1 part by weight based on 100 parts by weight of the polyoxymethylene resin. In a case in which the amount of the heat stabilizer is less than 0.005 parts by weight, the improvement of heat stability is insignificant, and in a case in which the amount of the heat stabilizer is greater than 1 part by weight, physical properties of the molded article obtained may deteriorate.

Also, in order to further improve the heat stability of the resin composition according to the present invention, at least one metal compound must be selected from the group consisting of a hydroxide of alkali metal or alkaline earth metal, an inorganic acid salt, an organic acid salt, or an alkoxide. Examples of the inorganic acid salt may be carbonate, phosphate, silicate, or borate, and examples of the organic acid salt may be a lauric acid salt, a stearic acid salt, an oleic acid salt, or a behenic acid salt. Examples of the alkoxide may be C₁₋₅ alkoxides such as methoxide and ethoxide.

The metal compound may be included in an amount of 0.01 parts by weight to 1 part by weight based on 100 parts by weight of the polyoxymethylene resin. In a case in which the amount of the metal compound is less than 0.01 parts by weight, additional improvements of heat stability may be insignificant, and in a case in which the amount of the metal compound is greater than 1 part by weight, physical properties of the molded article obtained may deteriorate, and an excessive amount of gas may be generated.

In addition to the above components, a dispersant, such as silicon oil, may be further added to the carbon nanotube-polyoxymethylene resin composition, if necessary.

### [Mode for Invention]

Hereinafter, the present invention will be described in more detail, according to specific examples. However, the following examples are merely presented to exemplify the present invention, and the scope of the present invention is not limited thereto.

### Examples 1 to 14 and Comparative Examples 1 to 11

Polyoxymethylene, carbon nanotubes, and a modifier having processing properties, in amounts listed in Tables 1 and 2, were melt-mixed using a 400 twin-screw extruder having an L/D of 40 under conditions including a screw speed of 200 rpm, a discharge rate of 100 kg/h, and a motor current of 150 A, and a melt extruded from the extruder die was cooled in a cooling bath to prepare pellets.

The pellets thus obtained were used to manufacture a molded plate having a size of 90 cm × 50 cm and a thickness of 8.3 mm by using a single-screw extruder. In this case, the extrusion was performed under conditions including an extrusion rate of 35 mm/min, a cylinder temperature of 185°C, and a pressure of 200 psi.

Materials used in the present invention are as follows:
* Polyoxymethylene (POM): KEPITAL F20-03 (MI = 9.0 g/10 min, particle diameter = 1 - 500 µm) (manufactured by Korea Engineering Plastics Co., Ltd).
* Carbon nanotubes (CNTs): Ctube 100 (diameter: 10-40 nm, length: 1-25 nm, MWCNT, manufactured by CNT Co., Ltd.)
* Modifier having processing properties
   - Polymer having a core-shell structure: STAPHYLOID IM-406 [(meth)acrylate ether styrene copolymer, core 55 wt%, shell 45 wt%](manufactured by Ganz Chemical Co., Ltd.) (hereinafter, referred to as "IM 406")
   - Ionomer: Surlyn 9970 (MI = 0.7 g/10 min, substitution metal = zinc)(manufactured by DuPont) (hereinafter, referred to as "SR99")

### Quality Evaluation During Compounding

Shear stress: main motor currents (shear rates) of a compounding machine were evaluated during compounding of the compositions, and the results thereof are presented in Tables 1 and 2. According to the measurement results, when the shear stress was high, the current loaded to the compounding machine was increased, and when the shear stress was low, the current loading on the compounding machine was decreased. When the shear stress was high, heat stability of the POM could be reduced, and a degree of the heat stability could be evaluated by a VDA 275 test, which evaluates heat stability of POM.

### Quality Evaluation of Injection Molded Article

### <Quality Evaluation of Molded Article Manufactured>

Tensile strength, flexural strength, Charpy impact strength, and VDA 275 (formaldehyde emissions) of the molded article manufactured were evaluated, and the results thereof are presented in Tables 1 and 2.

The quality evaluation was performed as follows:

### (1) Tensile strength

Tensile strength and elongation rates were measured in accordance with the ISO 527 standard. If values obtained in testing are high, tensile strength and elongation rates are good, and if the values are low, tensile strength and elongation rates are poor.

### (2) Flexural strength

Flexural strength was measured in accordance with the ISO 178 standard. If values obtained in testing are high, flexural strength is good, and if the values are low, flexural strength is poor.

### (3) Charpy impact strength

Charpy impact strength (notched) was measured in accordance with the ISO 179 standard. If values obtained in testing are low, Charpy impact strength is good, and if the values are low, Charpy impact strength is poor.

### (4) Formaldehyde emissions

The formaldehyde emissions from the molded article were measured according to VDA 275 (Volkswagen AG) in such a manner that a 1 L polyethylene bottle was filled with a predetermined amount of distilled water, the molded article was then installed at a specified height above the distilled water, and the bottle was sealed with a cap. The bottle was inserted into an oven and maintained at a constant temperature (60°C, 3 hrs) to dissolve the formaldehyde component released. The bottle was cooled to room temperature, and the total amount of the formaldehyde dissolved in the distilled water was then measured by an ultraviolet spectrophotometer after pretreatment with acetylacetone.

### Quality Evaluation of Extruded Molded Article

### (1) Surface Resistivity

The surface of the extruded plate was secondarily machined using a lathe, and surface resistivity was then measured in accordance with IEC 60093. In such a test, if values obtained are high, insulating properties are present, and if the values are low, conductivity is excellent.

### (2) Processability

The surface of the extruded plate was secondarily machined using a lathe, and surface conditions were then measured with a stereoscopic microscope (magnification: 300X). When the surface was without voids or tears, it was considered that the processability was good, and when there were voids or tears present, it was considered that the processing properties were poor.

Physical properties of the molded articles obtained are presented in Tables 1 and 2. Table 1 lists Examples and Table 2 lists Comparative Examples.

**[Table 1]**

| | Components | | | | Physical properties of molded article | | | | | | | Processing properties |
|---|---|---|---|---|---|---|---|---|---|---|---|---|
| | POM | CNT | IM 406 | SR 99 | Shear rate | Tensile strength | Tensile elongation | Flexural-strength | Impact | FA emissions | Surface resistance of extruded article | |
| | Parts by weight | | | | A | MPa | % | MPa | kJ/m² | mg/kg | Ω | |
| Example 1 | | 2.5 | 1.5 | - | 165 | 63 | 14 | 90 | 4.3 | 20 | 10⁴⁻⁸ | Good |
| Example 2 | | 2.5 | 2.0 | - | 160 | 60 | 14 | 90 | 4.3 | 18 | 10⁴⁻⁸ | Good |
| Example 3 | | 2.5 | 3.0 | - | 160 | 58 | 14 | 90 | 4.2 | 18 | 10⁴⁻⁸ | Good |
| Example 4 | | 2.5 | 1.0 | 0.3 | 170 | 62 | 14 | 90 | 4.3 | 19 | 10⁴⁻⁸ | Good |
| Example 5 | | 2.5 | 1.5 | 0.3 | 150 | 60 | 14 | 90 | 4.3 | 15 | 10⁴⁻⁸ | Excellent |
| Example 6 | 100 | 2.5 | 2.0 | 0.3 | 145 | 58 | 14 | 90 | 4.2 | 13 | 10⁴⁻⁸ | Excellent |
| Example 7 | | 2.5 | 2.5 | 0.3 | 140 | 56 | 14 | 90 | 4.2 | 11 | 10⁴⁻⁸ | Excellent |
| Example 8 | | 1 | 1.5 | 0.5 | 140 | 58 | 15 | 87 | 4.4 | 13 | 10¹² | Excellent |
| Example 9 | | 1.5 | 1.5 | 1.0 | 140 | 59 | 15 | 88 | 4.4 | 14 | 10⁷⁻² | Excellent |
| Example 10 | | 2 | 1.5 | 1.2 | 140 | 60 | 14 | 88 | 4.3 | 14 | 10⁷⁻¹² | Excellent |
| Example 11 | | 3.0 | 1.5 | 1.5 | 150 | 60 | 13 | 90 | 4.3 | 16 | 10³⁻⁶ | Excellent |
| Example 12 | | 4.0 | 1.5 | 1.5 | 155 | 60 | 13 | 90 | 4.2 | 16 | 10²⁻⁵ | Excellent |
| Example 13 | | 5.0 | 1.5 | 1.5 | 160 | 62 | 10 | 92 | 4.2 | 17 | 10¹⁻³ | Excellent |
| Example 14 | | 6.0 | 1.5 | 1.5 | 170 | 63 | 7 | 95 | 4.1 | 18 | 10¹⁻² | Excellent |

| | | | | | | | | | | | | |
|---|---|---|---|---|---|---|---|---|---|---|---|---|
| FA emissions: emissions of formaldehyde measured by VDA 275 | | | | | | | | | | | | |

As illustrated in Table 1, with respect to the resin compositions (Examples 1 to 3) including the polymer having a core-shell structure, as a modifier having processing properties, it may be understood that emissions of formaldehyde gas were significantly low because shear stress was reduced. Furthermore, since the occurrence of voids or tearing on the surface thereof during secondary machining was prevented, a polyoxymethylene resin composition having maximized processability as well as excellent electrical conductivity, heat stability, and a marketable extruded molded article may be obtained.

Furthermore, with respect to the resin compositions (Examples 4 to 14) having both the ionomer and the polymer having a core-shell structure, it may be understood that since shear stress was reduced, an effect of further decreasing the emissions of formaldehyde gas may not only be obtained, but the occurrence of voids or tearing on the surface thereof during secondary machining was also prevented.

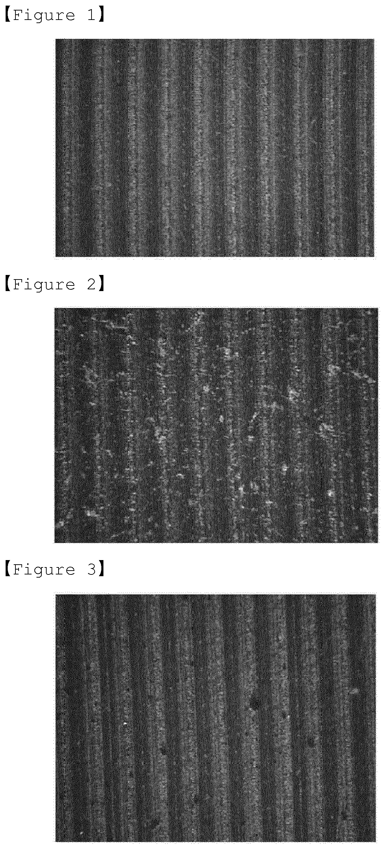

Also, a surface of the molded article obtained from the resin composition of Example 5 is illustrated in FIG. 1, and it may be understood from FIG. 1 that surface defects, such as voids or tearing, did not occur on the surface of the molded article obtained.

**[Table 2]**

| | Components | | | | Physical properties of molded article | | | | | | | Processability |
|---|---|---|---|---|---|---|---|---|---|---|---|---|
| | POM | CNT | IM 406 | SR 99 | Shear rate | Tensile strength | Tensile elongation | Flexural strength | Impact strength | FA emissions | Surface resistance of extruded article | |
| | Parts by weight | | | | A | MPa | % | MPa | kJ/m² | mg/kg | Ω | |
| Reference Example | 100 | - | - | - | 180 | 65 | 35 | 87 | 6.5 | 5-10 | 10¹⁶ | Excellent |
| Comparative Example 1 | | 1 | - | - | 190 | 67 | 12 | 95 | 4.5 | 181 | 10¹² | Void, tearing |
| Comparative Example 2 | | 2 | - | - | 200 | 69 | 10 | 105 | 4.2 | 216 | 10⁷⁻¹² | Void, tearing |
| Comparative Example 3 | | 2.5 | - | - | 220 | 71 | 10 | 109 | 4.3 | 277 | 10⁴⁻⁸ | Void, tearing |
| Comparative Example 4 | | 3 | - | - | 230 | 72 | 10 | 111 | 4.4 | 335 | 10³⁻⁶ | Void, tearing |
| Comparative Example 5 | | 4 | - | - | 240 | 74 | 5 | 120 | 4.2 | 382 | 10²⁻⁵ | Void, tearing |
| Comparative Example 6 | | 5 | - | - | 250 | 75 | 4 | 123 | 4.0 | 402 | 10¹⁻³ | Void, tearing |
| Comparative Example 7 | 100 | 6 | - | - | 270 | 75 | 3 | 129 | 3.8 | 607 | 10¹⁻² | Void, tearing |
| Comparative Example 8 | | 2.5 | - | 0.1 | 210 | 71 | 12 | 111 | 4.2 | 257 | 10⁴⁻⁸ | Tearing phenomenon |
| Comparative Example 9 | | 2.5 | - | 0.3 | 200 | 68 | 12 | 110 | 4.2 | 225 | 10⁴⁻⁸ | Tearing phenomenon |
| Comparative Example 10 | | 2.5 | - | 1.0 | 200 | 66 | 14 | 93 | 4.3 | 191 | 10⁴⁻⁸ | Tearing phenomenon |
| Comparative Example 11 | | 2.5 | 0.4 5 | - | 190 | 65 | 14 | 90 | 4.4 | 120 | 10⁴⁻⁸ | Tearing phenomenon |
| Comparative Example 12 | | 2.5 | 4.0 | - | 160 | 48 | 14 | 80 | 3.9 | 18 | 10⁴⁻⁸ | Good |
| Comparative Example 13 | | 2.5 | 1.0 | 2.0 | 170 | 50 | 14 | 84 | 4.0 | 19 | 10⁴⁻⁸ | Good |

| | | | | | | | | | | | | |
|---|---|---|---|---|---|---|---|---|---|---|---|---|
| FA emissions: emissions of formaldehyde measured by VDA 275 | | | | | | | | | | | | |

As illustrated in Table 2, mechanical properties of the resin compositions (Comparative Examples 1 to 7), which did not include the ionomer and the polymer having a core shell structure as the modifiers having processing properties of the present invention, and the resin compositions (Comparative Examples 8 to 10), which did not include the polymer having a core shell structure but only included the ionomer, had high mechanical properties. However, it may be understood that the commercialization of the extruded articles was not possible because shear stress during compounding was relatively high, the FA emissions according to VDA 275 were relatively high, and voids or tearing occurred on the surface thereof during secondary machining.

Surfaces of the molded articles obtained from Comparative Examples 3 and 9 are respectively presented in FIGS. 2 and 3, and it may be understood from FIGS. 2 and 3 that surface conditions were not good due to the occurrence of tearing and voids.

Furthermore, in the case of using the resin composition including a modifier having processing properties which did not satisfy the specified amount range of the present invention, even if the included modifier was a modifier having the processing properties of the present invention, in a case in which the amount of the modifier having the processing properties of the present invention was included in an amount less than 0.5 parts by weight (Comparative Example 11), it may be understood that physical properties, such as tensile strength, were good, but the emissions of formaldehyde were high, and surface defects of the molded article occurred. Also, in a case in which the amount of the modifier having processing properties was greater than 3 parts by weight (Comparative Example 12), emissions of formaldehyde are low and a good quality molded article without surface defects may be obtained. However, it may be understood that mechanical properties, such as tensile strength and flexural strength, may be poor.

In a case in which a ratio of the polymer having a core-shell structure to the ionomer, as modifiers having processing properties, are outside the specified amount range of the present invention, it may be understood that, similar to Comparative Example 12, the mechanical properties of the molded article may be deteriorated due to the large amount of ionomer.

## Claims

1. A carbon nanotube-polyoxymethylene resin composition comprising:
1 part by weight to 6 parts by weight of carbon nanotubes; and
0.3 part by weight to 3 parts by weight of a modifier having processing properties, based on 100 parts by weight of polyoxymethylene,
wherein the modifier having processing properties is a polymer having a core-shell structure.

2. The carbon nanotube-polyoxymethylene resin composition of claim 1, wherein the carbon nanotubes have a Brunauer-Emmett-Teller (BET) surface area of 150 m²/g to 300 m²/g, a diameter of 10 nm to 40 nm, and a length of 1 µm to 25 µm.

3. The carbon nanotube-polyoxymethylene resin composition of claim 1, wherein the polymer having a core-shell structure is composed of a core of a rubbery polymer and a shell of a glassy polymer.

4. The carbon nanotube-polyoxymethylene resin composition of claim 3, wherein the rubbery polymer is an alkyl acrylate having an alkyl group having 2 to 8 carbon atoms.

5. The carbon nanotube-polyoxymethylene resin composition of claim 4, wherein the rubbery polymer is a butyl acrylate.

6. The carbon nanotube-polyoxymethylene resin composition of claim 3, wherein the glassy polymer is a vinyl-based copolymer having an oxygen-containing polar group.

7. The carbon nanotube-polyoxymethylene resin composition of claim 6, wherein the oxygen-containing polar group is selected from the group consisting of a hydroxyl group, a group having an ether bond, an amide group, a nitro group, and mixtures thereof.

8. The carbon nanotube-polyoxymethylene resin composition of claim 7, wherein the group having an ether bond is a glycidyl group.

9. The carbon nanotube-polyoxymethylene resin composition of claim 6, wherein the vinyl-based copolymer having an oxygen-containing polar group is polymerized from a monomer having 2 to 5 oxygen-containing polar groups respectively containing one or more selected from the group consisting of hydroxyethyl (meth)acrylate, hydroxypropyl (meth)acrylate, and glycidyl (meth)acrylate.

10. The carbon nanotube-polyoxymethylene resin composition of claim 9, wherein the vinyl-based copolymer having an oxygen-containing polar group is a copolymer of the monomer having an oxygen-containing polar group and a monomer which is selected from alkyl (meth)acrylate having an alkyl group having 1 to 4 carbon atoms, styrene, vinyl toluene or aromatic vinyl, or aromatic vinylidene having 2 to 8 carbon atoms, and vinyl cyanide or vinylidene cyanide.

11. The carbon nanotube-polyoxymethylene resin composition of claim 3, wherein an amount of the shell is in a range of 10 wt% to 50 wt% based on a total weight of the polymer having a core-shell structure.

12. The carbon nanotube-polyoxymethylene resin composition of any one of claims 1 to 11, wherein the modifier having processing properties is a mixture comprising the polymer having a core-shell structure and an ionomer in a weight ratio of 1:1 to 10:1, and in the ionomer, hydrogen atoms of a carboxyl group, included in a copolymer composed of α-olefin and methyl acrylate or a derivative thereof, are substituted with metal ions.

13. A molded article formed of the carbon nanotube-polyoxymethylene resin composition of any one of claims 1 to 12,
wherein emissions of formaldehyde gas, measured using VDA 275, are 20 mg/kg or less.

14. The molded article of claim 13, wherein the molded article has a surface resistivity of 10² Ω/sq to 10⁹ Ω/sq.

## Patentansprüche

1. Eine Kohlenstoff-Nanoröhrchen-Polyoxymethylenharz-Zusammensetzung, umfassend:
1 Gewichtsteil bis 6 Gewichtsteile an Kohlenstoff-Nanoröhrchen; und
0,3 Gewichtsteile bis 3 Gewichtsteile eines Modifizierers mit Verarbeitungseigenschaften, bezogen auf 100 Gewichtsteile Polyoxymethylen,
wobei der Modifizierer mit Verarbeitungseigenschaften ein Polymer ist, das eine Kern-Schale-Struktur aufweist.

2. Kohlenstoff-Nanoröhrchen-Polyoxymethylenharz-Zusammensetzung nach Anspruch 1, wobei die Kohlenstoff-Nanoröhrchen eine Brunauer-Emmett-Teller (BET) Oberfläche von 150 m²/g bis 300 m²/g, einen Durchmesser von 10 nm bis 40 nm und eine Länge von 1 µm bis 25 µm aufweisen.

3. Kohlenstoff-Nanoröhrchen-Polyoxymethylenharz-Zusammensetzung nach Anspruch 1, wobei das Polymer, das eine Kern-Schale-Struktur aufweist, aus einem Kern aus einem gummiartigen Polymer und einer Schale aus einem glasartigen Polymer zusammengesetzt ist.

4. Kohlenstoff-Nanoröhrchen-Polyoxymethylenharz-Zusammensetzung nach Anspruch 3, wobei das gummiartige Polymer ein Alkylacrylat mit einer Alkylgruppe mit 2 bis 8 Kohlenstoffatomen ist.

5. Kohlenstoff-Nanoröhrchen-Polyoxymethylenharz-Zusammensetzung nach Anspruch 4, wobei das gummiartige Polymer ein Butylacrylat ist.

6. Kohlenstoff-Nanoröhrchen-Polyoxymethylenharz-Zusammensetzung nach Anspruch 3, wobei das glasartige Polymer ein Copolymer auf Vinylbasis ist, das eine Sauerstoff enthaltende polare Gruppe aufweist.

7. Kohlenstoff-Nanoröhrchen-Polyoxymethylenharz-Zusammensetzung nach Anspruch 6, wobei die Sauerstoff enthaltende polare Gruppe ausgewählt ist aus der Gruppe bestehend aus einer Hydroxylgruppe, einer Gruppe, die eine Etherbindung aufweist, einer Amidgruppe, einer Nitrogruppe und Mischungen davon.

8. Kohlenstoff-Nanoröhrchen-Polyoxymethylenharz-Zusammensetzung nach Anspruch 7, wobei die Gruppe, die eine Etherbindung aufweist ,eine Glycidylgruppe ist.

9. Kohlenstoff-Nanoröhrchen-Polyoxymethylenharz-Zusammensetzung nach Anspruch 6, wobei das Copolymer auf Vinylbasis, das eine Sauerstoff enthaltende polare Gruppe aufweist, aus einem Monomer mit 2 bis 5 Sauerstoff enthaltenden polaren Gruppen polymerisiert ist, die jeweils eines oder mehrere enthalten ausgewählt aus der Gruppe bestehend aus Hydroxyethyl(meth)acrylat, Hydroxypropyl(meth)acrylat und Glycidyl(meth)acrylat.

10. Kohlenstoff-Nanoröhrchen-Polyoxymethylenharz-Zusammensetzung nach Anspruch 9, wobei das Copolymer auf Vinylbasis, das eine Sauerstoff enthaltende polare Gruppe aufweist, ein Copolymer des Monomers, das eine Sauerstoff enthaltende polare Gruppe aufweist, und einem Monomer ist, das ausgewählt ist aus Alkyl(meth)acrylat mit einer Alkylgruppe mit 1 bis 4 Kohlenstoffatomen, Styrol, Vinyltoluol oder aromatisches Vinyl oder aromatisches Vinyliden mit 2 bis 8 Kohlenstoffatomen und Vinylcyanid oder Vinylidencyanid.

11. Kohlenstoff-Nanoröhrchen-Polyoxymethylenharz-Zusammensetzung nach Anspruch 3, wobei die Menge der Schale in einem Bereich von 10 Gew.-% bis 50 Gew.-% liegt bezogen auf das Gesamtgewicht des Polymers, das eine Kern-Schale-Struktur aufweist.

12. Kohlenstoff-Nanoröhrchen-Polyoxymethylenharz-Zusammensetzung nach einem der Ansprüche 1 bis 11, wobei der Modifizierer mit Verarbeitungseigenschaften eine Mischung ist, die das Polymer, das eine Kern-Schale-Struktur aufweist, und ein Ionomer in einem Gewichtsverhältnis von 1:1 bis 10:1 umfasst, und im lonomer Wasserstoffatome einer Carboxylgruppe, die in einem Copolymer enthalten sind, das aus einem α-Olefin und Methylacrylat oder einem Derivat davon zusammengesetzt ist, mit Metallionen substituiert sind.

13. Ein Formteil, der aus der Kohlenstoff-Nanoröhrchen-Polyoxymethylenharz-Zusammensetzung nach einem der Ansprüche 1 bis 12 gebildet ist, wobei die Emissionen von Formaldehydgas, gemessen unter Verwendung von VDA 275, 20 mg/kg oder weniger betragen.

14. Formteil nach Anspruch 13, wobei das Formteil einen Oberflächenwiderstand von 10² Ω/quadrat bis 10⁹ Ω/quadrat aufweist.

## Revendications

1. Composition de résine à base de nanotubes de carbone-polyoxyméthylène comprenant :
1 partie en poids à 6 parties en poids de nanotubes de carbone ; et
0,3 partie en poids à 3 parties en poids d'un modificateur ayant des propriétés de traitement, sur la base de 100 parties en poids de polyoxyméthylène,
dans laquelle le modificateur ayant des propriétés de traitement est un polymère ayant une structure noyau-enveloppe.

2. Composition de résine à base de nanotubes de carbone-polyoxyméthylène selon la revendication 1, dans laquelle les nanotubes de carbone ont une surface spécifique Brunauer-Emmett-Teller (BET) de 150 m²/g à 300 m²/g, un diamètre de 10 nm à 40 nm et une longueur de 1 µm à 25 µm.

3. Composition de résine à base de nanotubes de carbone-polyoxyméthylène selon la revendication 1, dans laquelle le polymère ayant une structure noyau-enveloppe est composé d'une enevloppe d'un polymère caoutchouteux et d'une carapace d'un polymère vitreux.

4. Composition de résine à base de nanotubes de carbone-polyoxyméthylène selon la revendication 3, dans laquelle le polymère caoutchouteux est un acrylate d'alkyle ayant un groupe alkyle comportant 2 à 8 atomes de carbone.

5. Composition de résine à base de nanotubes de carbone-polyoxyméthylène selon la revendication 4, dans laquelle le polymère caoutchouteux est un acrylate de butyle.

6. Composition de résine à base de nanotubes de carbone-polyoxyméthylène selon la revendication 3, dans laquelle le polymère vitreux est un copolymère à base de vinyle ayant un groupe polaire contenant de l'oxygène.

7. Composition de résine à base de nanotubes de carbone-polyoxyméthylène selon la revendication 6, dans laquelle le groupe polaire contenant de l'oxygène est choisi dans le groupe consistant en un groupe hydroxyle, un groupe ayant une liaison éther, un groupe amide, un groupe nitro, et des mélanges de ceux-ci.

8. Composition de résine à base de nanotubes de carbone-polyoxyméthylène selon la revendication 7, dans laquelle le groupe ayant une liaison éther est un groupe glycidyle.

9. Composition de résine à base de nanotubes de carbone-polyoxyméthylène selon la revendication 6, dans laquelle le copolymère à base de vinyle ayant un groupe polaire contenant de l'oxygène est polymérisé à partir d'un monomère comportant 2 à 5 groupes polaires contenant de l'oxygène contenant respectivement un ou plusieurs éléments choisis dans le groupe consistant en le (méth)acrylate d'hydroxyéthyle, le (méth)acrylate d'hydroxypropyle et le (méth)acrylate de glycidyle.

10. Composition de résine à base de nanotubes de carbone-polyoxyméthylène selon la revendication 9, dans laquelle le copolymère à base de vinyle ayant un groupe polaire contenant de l'oxygène est un copolymère du monomère ayant un groupe polaire contenant de l'oxygène et d'un monomère qui est choisi parmi un (méth)acrylate d'alkyle ayant un groupe alkyle comportant 1 à 4 atomes de carbone, le styrène, le vinyltoluène ou un vinyle aromatique, ou un vinylidène aromatique comportant 2 à 8 atomes de carbone, et le cyanure de vinyle ou le cyanure de vinylidène.

11. Composition de résine à base de nanotubes de carbone-polyoxyméthylène selon la revendication 3, dans laquelle une quantité de l'enveloppe est dans une plage de 10 % en poids à 50 % en poids sur la base d'un poids total du polymère ayant une structure noyau-enveloppe.

12. Composition de résine à base de nanotubes de carbone-polyoxyméthylène selon l'une quelconque des revendications 1 à 11, dans laquelle le modificateur ayant des propriétés de traitement est un mélange comprenant le polymère ayant une structure noyau-carapace et un ionomère dans un rapport en poids de 1 : 1 à 10 : 1, et dans l'ionomère, des atomes d'hydrogène d'un groupe carboxyle, inclus dans un copolymère composé d'α-oléfine et d'acrylate de méthyle ou d'un dérivé de ceux-ci, sont substitués par des ions de métal.

13. Article moulé formé de la composition de résine à base de nanotubes de carbone-polyoxyméthylène de l'une quelconque des revendications 1 à 12,
dans lequel des émissions de gaz formaldéhyde, mesurées à l'aide de VDA 275, sont de 20 mg/kg ou moins.

14. Article moulé selon la revendication 13, dans lequel l'article moulé a une résistivité de surface de 10² Ω/carré à 10⁹ Ω/carré.
